# EUROPEAN PATENT SPECIFICATION

(11) **EP 2 089 822 B1**
(45) Date of publication and mention of the grant of the patent: **16.03.2011**
(21) Application number: 07835160.8
(22) Date of filing: 31.10.2007
(51) Int. Cl.: G06F 17/30, H04L 29/08

(54) **SYSTEM AND PROCESS FOR IDENTIFYING ADDRESSES IN A DISTRIBUTED DATA NETWORK**
SYSTEM UND PROZESS ZUM IDENTIFIZIEREN VON ADRESSEN IN EINEM VERTEILTEN DATENNETZWERK
SYSTÈME ET PROCÉDÉ POUR IDENTIFIER DES ADRESSES DANS UN RÉSEAU DE DONNÉES DISTRIBUÉ

(30) Priority: 05.12.2006 SE 0602599
(43) Date of publication of application: 19.08.2009
(73) Proprietor: Teliasonera AB, 106 63 Stockholm (SE)
(72) Inventor: GÜLL, Martin, 245 62 Hjärup (SE)
(74) Representative: Löfgren, Bengt Håkan Alpo
(86) International application number: PCT/SE2007/000960
(87) International publication number: WO 2008/069718

(56) References cited:
- EP-A2- 1 693 768
- WO-A1-02/103963
- WO-A1-03/054720
- US-A1- 2003 023 756
- US-A1- 2005 086 262
- US-A1- 2005 177 613

## Description

### TECHNICAL FIELD

The present invention, according to a first aspect, relates to a system to, in a wireless communication network, identify addresses for access to information in a distributed computer network.

According to a second aspect, the present invention relates to a procedure to, in a wireless communication network, identify addresses for access to information in a distributed computer network.

According to a third aspect, the present invention relates to at least one computer program product to, in a wireless communication network, identify addresses for access to information in a distributed computer network.

### PRIOR ART

The patent document US-2004/0049574 A1 describes a web server which replies to a request message from a remote user device by dynamically producing web page code which can be interpreted by the user device. An identifier of type of device is extracted from the request message and is entered into a code generation motor which interprets stored instructions to produce the web page code with reference to selected device dependent information corresponding to the identifier of type of device. The web page information is stored as a content document including a set of instructions written in a program routine language. The web server produces web pages in a suitable form for each user device without the need to transform web pages from one form to another.

The patent document US-B1-6,820,116 describes a mobile browse searching system and procedure which make possible for a user to browse/search web services, to select a delivery class by use of the web browser, and to receive updating of frequently visited and related content at his or her wireless terminal, such as a cellular telephone. The system consists of two parts: A browsing agent and a user database. The combination stores and analyzes a user's web browsing habits in order to create personalized and optimized content as well, to, preferably with time delay, be delivered to the memory of the user's wireless terminal device, at a point of time when the wireless network is least utilized. The scheduling of delivery is achieved by means of a mobile content delivery system.

The patent document US-2003/0074635 A1 describes a mechanism to accentuate things of interest in an interface, such as a web page. The accentuating mechanism can retrieve and examine web pages referred to by the present web page. In this way the link accentuating mechanism can steal through a set of web pages and accentuate links which calls the user's attention to the thing of interest. The link accentuating mechanism also can register a user's click sequence in order to determine the latest or the most frequently visited links or things. The mechanism then can accentuate the latest or the most frequently visited links or things to make possible easy and rapid navigation to things of paticular interest to the user. The user can enter characteristics of a thing of interest, such as a type of file or type of link. A user can, for instance, look for a picture, sound or an e-mail address. The accentuating mechanism then examines a web page or interface for things and links which correspond to the characteristic. If the user uses a mobile calculation device, or in any other way operates with limited bandwidth, the accentuating mechanism can be located on a server. The server consequently only can transmit the thing of interest, if it has not been instructed in any other way by the user.

None of the above described solutions solves the problems of finding web pages which in a satisfactory way are usable for a certain type of terminal. The underlying problems are that different terminals have different characteristics regarding the ability to show web pages in the built-in web browser of the terminal. Depending on the memory of the terminal, size of screen, Java version etc, all terminals cannot represent the content of a web page equally well, or in the way the creator of the web page has intended.

### SUMMARY OF THE INVENTION

The above mentioned problems are solved by a system to, in a wireless communication network, identify addresses for access to information in a distributed computer network according to patent claim 1. The information of the identified addresses can be interpreted by a specific type of terminal for displaying of said information on it. The system includes a control device connected to the distributed computer network, one to the control device connected processoror device, and one to the control device connected memory device. The control device is operable to, for each request for address sent from a terminal to the control device, in the memory device store type of terminal, address in the distributed computer network, international subscriber directory number of mobile subscriber (MS-ISDN), and from the processor device received statistics in pairs connecting type of terminal, address in the distributed computer network and international subscriber directory number of mobile subscriber (MS-ISDN). The control device is operable to reproduce said statistics, with the aim of identifying said addresses of information which can be interpreted by said specific type of terminal.

The principal advantage of the system according to the present invention is that it solves the problem of finding addressable information, such as web pages, which are usable for a certain type of terminal in a simple way.

Another advantage in this connection is achieved if the processor device is operable to produce statistics regarding the most visited addresses of a specific type of terminal in form of a list.

In this connection an additional advantage is achieved if the processor device is operable to produce statistics regarding the most used types of terminals of a specific address in form of a list.

Another advantage in this connection is achieved if the processor device is operable to produce statistics regarding the most visited addresses of a specific international subscriber directory number of a mobile subscriber (MS-ISDN) in form of a list.

In this connection an additional advantage is achieved if the distributed computer network is Internet.

An additional advantage in this connection is achieved if said memory device is a database.

In this connection an additional advantage is achieved if said addresses are URL (Uniform Resource Locator).

An additional advantage in this connection is achieved if the communication network is a mobile communication network, such as a GSM-network.

The above mentioned problems are solved, as well, by a procedure to, in a wireless communication network, identify addresses for access to information in a distributed computer network according to the patent claim 9. The information of the identified addresses can be interpreted by a specific type of terminal for displaying of said information on it. The procedure includes the steps:
- to, for each address request sent from a terminal to one in the system included control device, in a memory device connected to the control device store type of terminal, address in the distributed computer network, international subscriber directory number of mobile subscriber (MS-ISDN), and from one to the control device connected processor device received statistics in pairs connecting type of terminal, address in the distributed computer network and international subscriber directory number of mobile subscriber (MS-ISDN); and
- to reproduce said statistics with the aim of identifying said addresses of information which can be interpreted by said specific type of terminal.

The principal advantage of the procedure according to the present invention is that it solves the problem of finding addressable information, such as web pages, which in a simple way is usable for a certain type of terminal.

An additional advantage in this connection is achieved if the procedure also includes the step:
- to, by means of the processor device, produce statistics regarding the most visited addresses of a specific type of terminal in form of a list.

In this connection an additional advantage is achieved if the procedure also includes the step:
- to, by means of the processor device, produce statistics regarding the most used types of terminals of a specific address in form of a list.

An additional advantage in this connection is achieved if the procedure also includes the step:
- to, by means of the processor device, produce statistics regarding the most visited addresses of a specific international subscriber directory number of a mobile subscriber (MS-ISDN) in form of a list.

In this connection an additional advantage is achieved if the distributed computer network is internet.

An additional advantage in this connection is achieved if said addresses are URL (Uniform Resource Locator).

In this connection an additional advantage is achieved if said memory device is a database.

An additional advantage in this connection is achieved if the communication network is a mobile communication network, such as a GSM-network.

The above mentioned problems moreover are solved by at least one computer program product according to the patent claim 17. The computer program product can be loaded directly into the internal memory of at least one digital computer and includes software code sections to execute the steps according to patent claim 9, that is, according to the present invention, when said at least one product is run on said at least one computer.

The principal advantage of said computer program product according to the present invention is that it solves the problem of finding addressable information, such as web pages, which can be used for a certain type of terminal in a simple way.

It should be observed that the term "include/ including" as it is used in this specification is intended to indicate the existence of a given characteristic, step or component, without exclusion of the existence of one or more characteristics, parts, steps, components or groups thereof.

Embodiments of the invention now will be described with a reference to the enclosed drawings, where:

### BRIEF DESCRIPTION OF THE DRAWINGS

- Figure 1: shows a block diagram of a system to, in a wireless communication network, identify addresses for access to information in a distributed computer network according to the present information;
- Figure 2: is a flow chart which shows a procedure to, in a wireless communication network, identify addresses for access to information in a distributed computer network according to the present information; and
- Figure 3: shows schematically a number of computer program products according to the present invention.

### DETAILED DESCRIPTION OF PREFERRED EMBODIMENTS

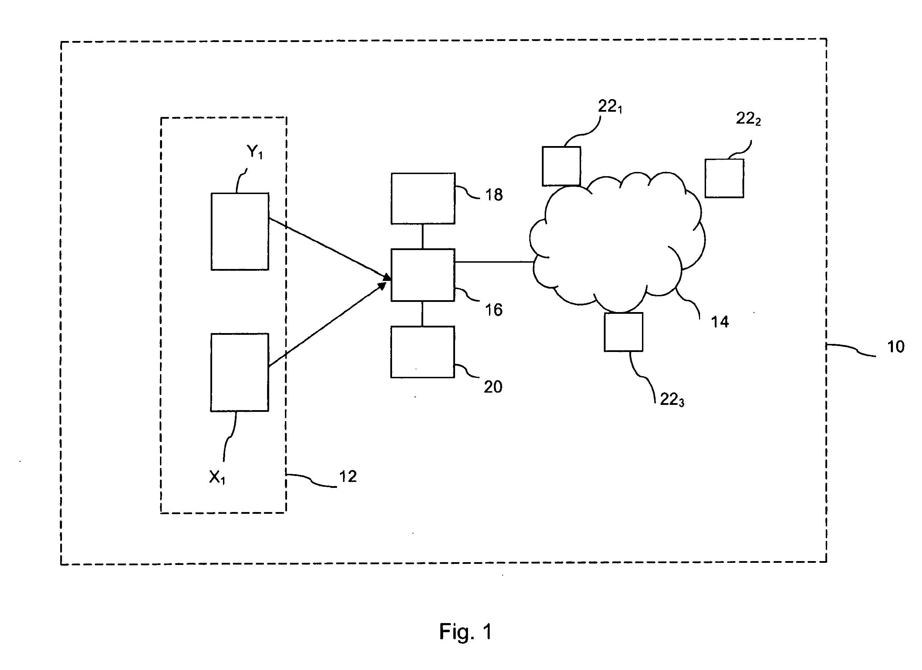

In Figure 1 a block diagram of a system 10 is shown to, in a wireless communication network 12, identify addresses for access to information in a distributed computer network 14, which information of the identified addresses can be interpreted by a specific type of terminal X_{1,}.... Xₙ, Y_{1,}.... Yₘ, where n and m are integers and n≥1 and m≥1. For the sake of simplicity only two terminals, X₁, Y₁, are shown in Fig. 1. Said information then can be displayed on the specific type of terminal. The system 10 includes a control device 16 connected to the distributed computer network 14. As also can be seen in Figure 1, the system 10 includes a processor device 18 connected to the control device 16. The system 10 in addition includes a memory device 20 connected to the control device 16. The control device 16 is operable to, for each access request (illustrated by arrows in Figure 1) sent from a terminal X₁, Y₁ to the control device 16, store type of terminal X₁, Y₁, address in the distributed computer network 14, and international subscriber directory number of mobile subscriber (MS-ISDN, Mobile Subscriber - International Subscriber Directory Number) in the memory device 20. The control device 16, at the same time, in the memory device 20, stores from the processor device 18 received statistics in pairs connecting type of terminal X₁, Y₁, address in the distributed computer network 14, and international subscriber directory number of mobile subscriber (MS-ISDN). The control device 16 further is operable to reproduce said statistics with the aim of identifying said addresses of information which can be interpreted by said specific type of terminal X₁, Y₁. In Figure 1 also three different web sites 22₁, 22₂, 22₃ are shown, which are accessible via the distributed computer network 14. It should be called to attention that the wireless communication network 12 is only shown schematically in Figure 1.

According to one preferred embodiment of the system 10, the processor device 18 produces statistics regarding the most visited addresses of a specific type of terminal X₁, Y₁ in form of a list.

The processor device 18 in addition can produce statistics regarding the most used types of terminals X₁, Y₁ of a specific address in form of a list.

According to one more preferred embodiment of the system 10, the processor device 18 produces statistics regarding the most visited addresses of a specific international subscriber directory number of a mobile subscriber (MS-ISDN) in form of a list.

The distributed computer network 14 preferably is Internet 14.

According to one preferred embodiment of the system 10, the memory device 20 is a database 20.

In the case when the distributed computer network 14 is Internet 14, said addresses are URL (Uniform Resource Locator).

According to one preferred embodiment of the system 10, the communication network 12 is a mobile communication network 12, such as a GSM-network 12.

Below a description follows of the system 10 in a different way and with different choice of words.

The system 10 according to the present invention uses information which is generated in the mobile network regarding which telephone the customer is using at web-surfing. This information is stored in a database together with information about which URLs that are most frequently visited, and the user's MS-ISDN. All in all, the accumulated statistics from a mobile operator's all customers will provide an exact representation of which web sites that functions best for a certain telephone and which has a content which other like-minded users have been interested in. It is based on the assumption that if content and customer experience at a certain web site is good and functions for the telephone, then the relative attendance rate of visitors will be higher than on other web sites.

If we once more refer to Figure 1, and the reference designation 22₁ indicates the web site A with the pages B and C, 22₂ indicates the web site D with the pages E and F, and 22₃ indicates the web site G with the pages H and I, the above mentioned lists can look like this:
* For terminal X₁ - most visited URL:
   1. Web site A, page C
   2. Web site G, page I
* For URL-B - most used types of terminals:
   1. Terminal X₁
   2. Terminal Y₁
* For MS-ISDN - most visited URL:
   1. Web site D, page F
   2. Web site G, page H

The information and the mapping between terminal type and URL can be used in a number of different ways. Below some examples follow.

* Example 1. When the user surfs in on a page, URL A-C, which he/she is interested in, then at the end of the web page a recommendation is inserted of other sites frequently visited by users with the same type of terminal. The recommendations also are sorted according to the visiting patterns of other users who have visited the same site, that is, not only according to the visiting pattern of the terminal type, but also the combination type of terminal and URL. Consequently, the most visited URLs are highest recommended, which other users who also have been in at URL A-C have visited. This creates a connection between URL, type of terminal and interest in content of similar users.
- Algorithm: Retrieve information in the database about other visitors who have visited the same page. Pick/select the visitors who have used the same category of terminal. Pick/select the URLs which have been most frequently visited. Sum up over all users and sort in such a way that the most visited URLs which these visitors with the same type of terminals have visited will land up at the top of the list.
   * Example 2. On the mobile portal of the operators, a 1 0-in-top-list can be presented/shown which is based on which places that have been most frequently visited by the type of terminal.
- Algorithm: Of all visited URLs, sort in such a way that the URL which has most visits from the same type of terminal lands up at the top of the list.
   * Example 3. The content in the portal can be sorted and prioritized according to how many with the same type of terminal that have visited a certain URL.
- Algorithm: Sort the order of links. The one of the links which has the highest number of visits in the same type of terminal will land up at the top of the list.

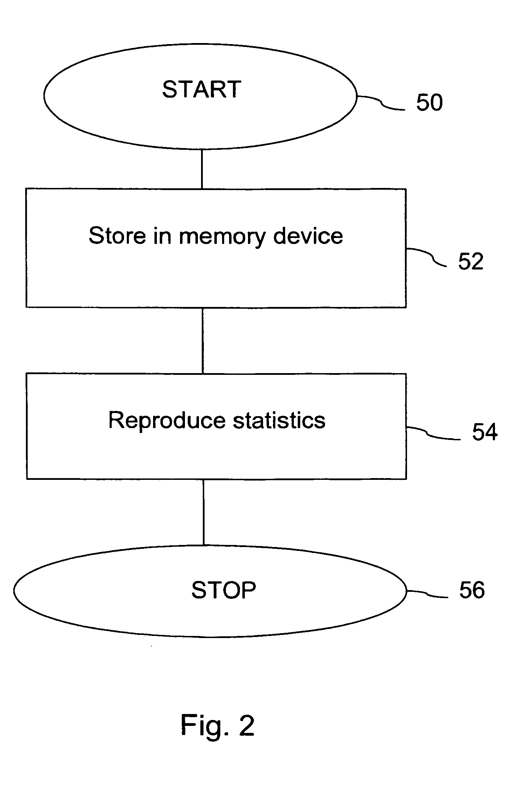

In Figure 2, a flow chart is shown of a procedure to, in a wireless communication network 12, identify addresses for access to information in a distributed computer network 14, which information of the identified addresses can be interpreted by a specific type of terminal X₁, Y₁ for displaying said information on it. The procedure starts with the block 50. The procedure then continues, at the block 52, by execution of the step: To, for each address request sent from a terminal to one in the system 10 included control device 16 in a memory device 20 connected to the control device 16, store type of terminal X₁, Y₁, address in the distributed computer network 14, international subscriber directory number of mobile subscriber (MS-ISDN), and from one to the control device 16 connected processor device 18 received statistics in pairs connecting type of terminal X₁, Y₁, address in the distributed computer network 14 and international subscriber directory number of mobile subscriber (MS-ISDN). After that, the procedure continues, at the block 54, with the step: To reproduce said statistics, with the aim of identifying said addresses of information, which can be interpreted by said specific type of terminal X₁, Y₁. The procedure then is ended at the block 56.

According to one preferred embodiment of the procedure, the processor device 18 produces statistics regarding the most visited addresses of a specific type of terminal X₁, Y₁ in form of a list.

The processor device 18 additionally can produce statistics regarding the most used types of terminals X₁, Y₁ of a specific address in form of a list.

According to yet another preferred embodiment of the procedure, the processor device 18 produces statistics regarding the most visited addresses of a specific international subscriber directory number of a mobile subscriber (MS-ISDN) in form of a list.

According to one preferred embodiment of the procedure, the distributed computer network 14 is Internet 14. In this case said addresses are URL (Uniform Resource Locator).

Said memory device 20 can be in form of a database 20.

The wireless communication network 12 preferably is a mobile communication network 12, such as a GSM-network 12.

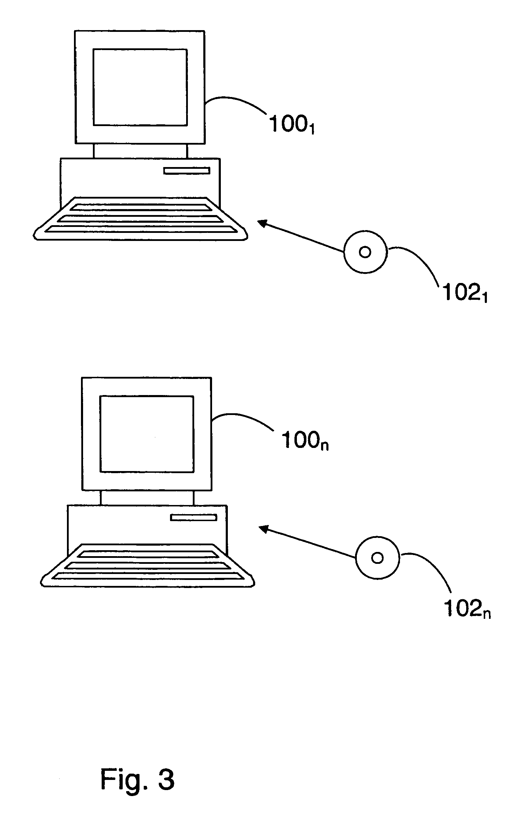

In Figure 3 a schematic picture of some computer program products according to the present invention are shown. In Figure 3, n different digital computers 100₁,..., 100ₙ, where n is an integer, are shown. In Figure 3 also n different computer program products 102₁,...,102ₙ, here shown in form of CDs, are shown. The different computer program products 102₁,...,102ₙ can be loaded directly into the internal memory of the n different digital computers 100₁,...,100ₙ. Each computer program product 102₁,...,102ₙ includes software code sections to execute some, or all, steps according to Figure 2 when the product/products 102₁,..., 102ₙ is/are run on said computer 100₁,...,100ₙ. The computer program products 102₁,...,102ₙ can, for instance, be in form of diskettes, RAM-disks, magnetic tape, opto-magnetic disks or any other suitable products.

The invention is not limited to the described embodiments. It will be evident to experts in the field that a large number of different modifications are possible within the scope of the following patent claims.

## Claims

1. System (10) to identify addresses to information in a distributed computer network (14), which information at the identified addresses can be interpreted by a specific type of terminal (X₁, ...Xₙ Y₁,.... Yₘ ) in a wireless communication network (12) for displaying of said information on it, said system (10) including a control device (16) connected to the distributed computer network (14), one to the control device (16) connected processor device (18), and one to the control device (16) connected memory device (20), the control device (16) being operable to, for each address request sent from a terminal to the control device (16), in the memory device (20) store type of terminal (X₁, ..., Xₙ, Y₁, ..., Yₘ), address in the distributed computer network (14), international subscriber directory number of mobile subscriber (MS-ISDN), **characterized in that** the control device is operable to receive and store statistics produced by the processor device (18), said statistics connecting pair wise type of terminal (X₁, ..., Xₙ, Y₁, ..., Yₘ), address in the distributed computer network (14), and international subscriber directory number of mobile subscriber (MS-ISDN), after which the control device (16) is operable to reproduce said statistics with the aim of identifying said addresses of information, which can be interpreted by said specific type of terminal (X₁, ..., Xₙ, Y₁, ..., Yₘ).

2. System (10) to identify addresses for access to information in a distributed computer network (14) as claimed in patent claim 1, **characterized in that** the processor device (18) is operable to produce statistics regarding the most visited addresses of a specific type of terminal (X₁, ..., Xₙ, Y₁, ..., Yₘ) in form of a list.

3. System (10) to identify addresses for access to information in a distributed computer network (14) as claimed in patent claim 1 or 2, **characterized in that** the processor device (18) is operable to produce statistics regarding the most used types of terminal (X₁, ..., Xₙ, Y₁, ..., Yₘ) of a specific address in form of a list.

4. System (10) to identify addresses for access to information in a distributed computer network (14) as claimed in any one of the patent claims 1-3, **characterized in that** the processor device (18) is operable to produce statistics regarding the most visited addresses of a specific international subscriber directory number of a mobile subscriber (MS-ISDN) in form of a list.

5. System (10) to identify addresses for access to information in a distributed computer network (14) as claimed in any one of the patent claims 1-4, **characterized in that** the distributed computer network (14) is Internet (14).

6. System (10) to identify addresses for access to information in a distributed computer network (14) as claimed in any one of the patent claims 1-5, **characterized in that** said memory device (20) is a database (20).

7. System (10) to identify addresses for access to information in a distributed computer network (14) as claimed in any one of the patent claims 1-6, **characterized in that** said addresses are URL, Uniform Resource Locators.

8. System (10) to identify addresses for access to information in a distributed computer network (14) as claimed in any one of the patent claims 1-7, **characterized in that** the communication network (12) is a mobile communication network (12) such as a GSM-network (12).

9. Procedure to identify addresses for access to information in a distributed computer network (14), which information at the identified addresses can be interpreted by a specific type of terminal (X₁, ..., Xₙ, Y₁, ..., Yₘ) in a wireless communication network (12) for displaying of said information on it, which procedure includes the steps:
- to, for each address request sent from a terminal to one in the system (10) included control device (16), in a memory device (20) connected to the control device (16) store type of terminal (X₁, ..., Xₙ, Y₁, ..., Yₘ), address in the distributed computer network (14), international subscriber directory number of mobile subscriber (MS-ISDN), and to receive and store statistics produced by a processor device (18) connected to the control device (16), said statistics connecting pair wise type of terminal (X₁, ..., Xₙ, Y₁, ..., Yₘ), address in the distributed computer network (14), and international subscriber directory number of mobile subscriber (MS-ISDN); and
- to reproduce said statistics, with the aim of identifying said addresses of information which can be interpreted by said specific type of terminal (X₁, ..., Xₙ, Y₁, ..., Yₘ).

10. Procedure to identify addresses for access to information in a distributed computer network (14) as claimed in patent claim 9, **characterized in that** the procedure in addition includes the step:
- to, by means of the processor device (18), produce statistics regarding the most visited addresses of a specific type of terminal (X₁, ..., Xₙ, Y₁, ..., Yₘ) in form of a list.

11. Procedure to identify addresses for access to information in a distributed computer network (14) as claimed in patent claim 9 or 10, **characterized in that** the procedure in addition includes the step:
- to, by means of the processor device (18), produce statistics regarding the most used types of terminals (X₁, ..., Xₙ, Y₁, ..., Yₘ) of a specific address in form of a list.

12. Procedure to identify addresses for access to information in a distributed computer network (14) as claimed in any one of the patent claims 9-11, **characterized in that** the procedure in addition includes the step:
- to, by means of the processor device (18), produce statistics regarding the most visited addresses of a specific international subscriber directory number of a mobile subscriber (MS-ISDN) in form of a list.

13. Procedure to identify addresses for access to information in a distributed computer network (14) as claimed in any of the patent claims 9-12, **characterized in that** the distributed computer network (14) is internet (14).

14. Procedure to identify addresses for access to information in a distributed computer network (14) as claimed in any of the patent claims 9-13, **characterized in that** said addresses are URL Uniform Resource Locators.

15. Procedure to identify addresses for access to information in a distributed computer network (14) as claimed in any of the patent claims 9-14, **characterized in that** said memory device (20) is a database (20).

16. Procedure to identify addresses for access to information in a distributed computer network (14) as claimed in any of the patent claims 9-15, **characterized in that** the communication network (12) is a mobile communication network (12) such as a GSM-network (12).

17. At least one computer program product (102₁, ..., 102ₙ) which can be loaded directly into the internal memory of at least one digital computer (100₁, ..., 100ₙ), including software code sections to execute the steps according to patent claim 9 when said at least one product (102₁, ..., 102ₙ) is/are run on said at least one computer (100₁, ..., 100ₙ).

## Patentansprüche

1. System (10) zum Identifizieren von Adressen zu Informationen in einem verteilten Computernetzwerk (14), wobei die Informationen an den identifizierten Adressen von einer spezifischen Art Endgerät (X₁, ...Xₙ, Y₁, ... Yₘ) in einem drahtlosen Kommunikationsnetzwerk (12) interpretiert werden können, zum Anzeigen der Informationen darauf, wobei das System (10) eine Steuervorrichtung (16), die an das verteilte Computernetzwerk (14) angeschlossen ist, eine an die Steuervorrichtung (16) angeschlossene Prozessorvorrichtung (18) und eine an die Steuervorrichtung (16) angeschlossene Speichervorrichtung (20) umfasst, wobei die Steuervorrichtung (16) betrieben werden kann, für jede Adressanforderung, die von einem Endgerät an die Steuervorrichtung (16) gesendet wird, in der Speichervorrichtung (20) die Art des Endgeräts (X₁, ..., Xₙ, Y₁, ..., Yₘ), die Adresse in dem verteilten Computernetzwerk (14), die internationale Teilnehmerverzeichnisnummer des Mobilteilnehmers (MS-ISDN) zu speichern, **dadurch gekennzeichnet, dass** die Steuervorrichtung betrieben werden kann, Statistiken zu empfangen und zu speichern, die von der Prozessorvorrichtung (18) erzeugt werden, wobei die Statistiken die Art des Endgeräts (X₁, ..., Xₙ, Y₁, ..., Yₘ), die Adresse in dem verteilten Computer-Netzwerk (14) und die internationale Teilnehmerverzeichnisnummer des Mobilteilnehmers (MS-ISDN) paarweise verbinden, nach denen die Steuervorrichtung (16) betrieben werden kann, diese Statistiken mit dem Ziel zu reproduzieren, die Adressen von Informationen zu identifizieren, die von der spezifischen Art Endgerät (X₁, ..., Xₙ, Y₁, ..., Yₘ) interpretiert werden können.

2. System (10) zum Identifizieren von Adressen für den Zugriff auf Informationen in einem verteilten Computernetzwerk (14) nach Patentanspruch 1, **dadurch gekennzeichnet, dass** die Prozessorvorrichtung (18) betrieben werden kann, Statistiken in Bezug auf die am häufigsten besuchten Adressen einer spezifischen Art Endgerät (X₁, ..., Xₙ, Y₁, ..., Yₘ) in Form einer Liste zu erzeugen.

3. System (10) zum Identifizieren von Adressen für den Zugriff auf Informationen in einem verteilten Computernetzwerk (14) nach Patentanspruch 1 oder 2, **dadurch gekennzeichnet, dass** die Prozessorvorrichtung (18) betrieben werden kann, Statistiken in Bezug auf die am häufigsten verwendeten Arten von Endgeräten (X₁, ..., Xₙ, Y_{1,} ..., Yₘ) einer spezifischen Adresse in Form einer Liste zu erzeugen.

4. System (10) zum Identifizieren von Adressen für den Zugriff auf Informationen in einem verteilten Computernetzwerk (14) nach einem der Patentansprüche 1 - 3, **dadurch gekennzeichnet, dass** die Prozessorvorrichtung (18) betrieben werden kann, Statistiken in Bezug auf die am häufigsten besuchten Adressen einer spezifischen internationalen Teilnehmerverzeichnisnummer eines Mobilteilnehmers (MS-ISDN) in Form einer Liste zu erzeugen.

5. System (10) zum Identifizieren von Adressen für den Zugriff auf Informationen in einem verteilten Computernetzwerk (14) nach einem der Patentansprüche 1 - 4, **dadurch gekennzeichnet, dass** das verteilte Computernetzwerk (14) das Internet (14) ist.

6. System (10) zum Identifizieren von Adressen für den Zugriff auf Informationen in einem verteilten Computernetzwerk (14) nach einem der Patentansprüche 1 - 5, **dadurch gekennzeichnet, dass** die Speichervorrichtung (20) eine Datenbank (20) ist.

7. System (10) zum Identifizieren von Adressen für den Zugriff auf Informationen in einem verteilten Computernetzwerk (14) nach einem der Patentansprüche 1 - 6, **dadurch gekennzeichnet, dass** die Adressen URL, Uniform Resources Locators, sind.

8. System (10) zum Identifizieren von Adressen für den Zugriff auf Informationen in einem verteilten Computernetzwerk (14) nach einem der Patentansprüche 1 - 7, **dadurch gekennzeichnet, dass** das Kommunikationsnetzwerk (12) ein mobiles Kommunikationsnetzwerk (12) wie ein GSM-Netzwerk (12) ist.

9. Verfahren zum Identifizieren von Adressen für den Zugriff auf Informationen in einem verteilten Computernetzwerk (14), wobei die Informationen an den identifizierten Adressen von einer spezifischen Art Endgerät (X₁, ..., Xₙ, Y₁, ..., Yₘ) in einem drahtlosen Kommunikationsnetzwerk (12) zum Anzeigen der Informationen darauf interpretiert werden können, wobei das Verfahren die folgenden Schritte umfasst:
- Speichern, für jede Adressenanforderung, die von einem Endgerät an eine von dem System (10) umfasste Steuervorrichtung (16) gesendet wurde, in einer Speichervorrichtung (20), die an die Steuervorrichtung (16) angeschlossen ist, der Art des Endgeräts (X₁, ..., Xₙ, Y₁, ..., Yₘ), der Adresse in dem verteilten Computernetzwerk (14), der internationalen Teilnehmerverzeichnisnummer des Mobilteilnehmers (MS-ISDN), und Empfangen und Speichern von Statistiken, die von einer Prozessorvorrichtung (18) erzeugt werden, die an die Steuervorrichtung (16) angeschlossen ist, wobei die Statistiken die Art des Endgeräts (X₁, ..., Xₙ, Y₁, ..., Yₘ), die Adresse in dem verteilten Computernetzwerk (14) und die internationale Teilnehmerverzeichnisnummer des Mobilteilnehmers (MS-ISDN) paarweise verbindet; und
- Reproduzieren der Statistiken, mit dem Ziel die Adressen von Informationen zu identifizieren, die von der spezifischen Art Endgerät (X₁, ..., Xₙ, Y₁, ..., Yₘ) interpretiert werden können.

10. Verfahren zum Identifizieren von Adressen für den Zugriff auf Informationen in einem verteilten Computernetzwerk (14) nach Patentanspruch 9, **dadurch gekennzeichnet, dass** das Verfahren zusätzlich folgenden Schritt umfasst:
- Erzeugen, mittels einer Prozessorvorrichtung (18), von Statistiken in Bezug auf die am häufigsten besuchten Adressen einer spezifischen Art Endgerät (X₁, ..., Xₙ, Y₁, ..., Yₘ) in Form einer Liste.

11. Verfahren zum Identifizieren von Adressen für den Zugriff auf Informationen in einem verteilten Computernetzwerk (14) nach Patentanspruch 9 oder 10, **dadurch gekennzeichnet, dass** das Verfahren zusätzlich den folgenden Schritt umfasst:
- Erzeugen, mittels der Prozessorvorrichtung (18), von Statistiken in Bezug auf die am häufigsten verwendeten Arten von Endgeräten (X₁, ..., Xₙ, Y₁, ..., Yₘ) einer spezifischen Adresse in Form einer Liste.

12. Verfahren zum Identifizieren von Adressen für den Zugriff auf Informationen in einem verteilten Computernetzwerk (14) nach einem der Patentansprüche 9-11, **dadurch gekennzeichnet, dass** das Verfahren zusätzlich den folgenden Schritt umfasst:
- Erzeugen, mittels der Prozessorvorrichtung (18), von Statistiken in Bezug auf die am häufigsten besuchten Adressen einer spezifischen internationalen Teilnehmerverzeichnisnummer eines Mobilteilnehmers (MS-ISDN) in Form einer Liste.

13. Verfahren zum Identifizieren von Adressen für den Zugriff auf Informationen in einem verteilten Computernetzwerk (14) nach einem der Patentansprüche 9-12, **dadurch gekennzeichnet, dass** das verteilte Computer Netzwerk (14) das Internet (14) ist.

14. Verfahren zum Identifizieren von Adressen für den Zugriff auf Informationen in einem verteilten Computernetzwerk (14) nach einem der Patentansprüche 9-13, **dadurch gekennzeichnet, dass** die Adressen URL, Uniform Resource Locators, sind.

15. Verfahren zum Identifizieren von Adressen für den Zugriff auf Informationen in einem verteilten Computernetzwerk (14) nach einem der Patentansprüche 9-14, **dadurch gekennzeichnet, dass** die Speichervorrichtung (20) eine Datenbank (20) ist.

16. Verfahren zum Identifizieren von Adressen für den Zugriff auf Informationen in einem verteilten Computernetzwerk (14) nach einem der Patentansprüche 9-15, **dadurch gekennzeichnet, dass** das Kommunikationsnetzwerk (12) ein mobiles Kommunikationsnetzwerk (12) wie ein GSM-Netzwerk (12) ist.

17. Mindestens ein Computerprogrammprodukt (102₁,..., 102ₙ), das direkt in den internen Speicher mindestens eines digitalen Computers (100₁, ..., 100ₙ) geladen werden kann, umfassend Softwarecodeabschnitte zum Ausführen der Schritte nach Patentanspruch 9, wenn das mindestens eine Produkt (102₁, ..., 102ₙ) auf dem mindestens einen Computer (100₁, ..., 100ₙ) gelaufen lassen wird/werden.

## Revendications

1. Système (10) pour identifier des adresses vers des informations dans un réseau d'ordinateurs distribué (14), lesquelles informations aux adresses identifiées peuvent être interprétées par un type spécifique de terminal (X₁, ...Xₙ, Y₁, ...,Yₘ) dans un réseau de communication sans fil (12) pour l'affichage desdites informations sur celui-ci, ledit système (10) comprenant un dispositif de commande (16) connecté au réseau d'ordinateurs distribué (14), un dispositif processeur (18) connecté au dispositif de commande (16), et un dispositif de mémoire (20) connecté au dispositif de commande (16), le dispositif de commande (16) étant opérationnel pour, pour chaque demande d'adresse envoyée d'un terminal au dispositif de commande (16), enregistrer dans le dispositif de mémoire (20) le type de terminal (X₁, ..., Xₙ, Y₁, ..., Yₘ), l'adresse dans le réseau d'ordinateurs distribué (14), le numéro de répertoire d'abonné international d'abonné à un service mobile (MSISDN), **caractérisé en ce que** le dispositif de commande est opérationnel pour recevoir et enregistrer des statistiques produites par le dispositif processeur (18), lesdites statistiques connectant par paires le type de terminal (X₁, ..., Xₙ, Y₁, ..., Yₘ), l'adresse dans le réseau d'ordinateurs distribué (14), et le numéro de répertoire d'abonné international d'abonné à un service mobile (MSISDN), après quoi le dispositif de commande (16) est opérationnel pour reproduire lesdites statistiques dans le but d'identifier lesdites adresses d'informations, qui peuvent être interprétées par ledit type spécifique de terminal (X₁, ..., Xₙ, Y₁, ..., Yₘ).

2. Système (10) pour identifier des adresses pour l'accès à des informations dans un réseau d'ordinateurs distribué (14) selon la revendication 1, **caractérisé en ce que** le dispositif processeur (18) est opérationnel pour produire des statistiques concernant les adresses les plus visitées d'un type spécifique de terminal (X₁, ..., Xₙ, Y₁, ..., Yₘ) sous forme de liste.

3. Système (10) pour identifier des adresses pour l'accès à des informations dans un réseau d'ordinateurs distribué (14) selon la revendication 1 ou 2, **caractérisé en ce que** le dispositif processeur (18) est opérationnel pour produire des statistiques concernant les types de terminaux (X₁, ..., Xₙ, Y₁, ..., Yₘ) les plus utilisés d'une adresse spécifique sous forme de liste.

4. Système (10) pour identifier des adresses pour l'accès à des informations dans un réseau d'ordinateurs distribué (14) selon l'une quelconque des revendications 1-3, **caractérisé en ce que** le dispositif processeur (18) est opérationnel pour produire des statistiques concernant les adresses les plus visitées d'un numéro de répertoire d'abonné international spécifique d'un abonné à un service mobile (MSISDN) sous forme de liste.

5. Système (10) pour identifier des adresses pour l'accès à des informations dans un réseau d'ordinateurs distribué (14) selon l'une quelconque des revendications 1-4, **caractérisé en ce que** le réseau d'ordinateurs distribué (14) est Internet (14).

6. Système (10) pour identifier des adresses pour l'accès à des informations dans un réseau d'ordinateurs distribué (14) selon l'une quelconque des revendications 1-5, **caractérisé en ce que** ledit dispositif de mémoire (20) est une base de données (20).

7. Système (10) pour identifier des adresses pour l'accès à des informations dans un réseau d'ordinateurs distribué (14) selon l'une quelconque des revendications 1-6, **caractérisé en ce que** lesdites adresses sont des URL, Uniform Resource Locators.

8. Système (10) pour identifier des adresses pour l'accès à des informations dans un réseau d'ordinateurs distribué (14) selon l'une quelconque des revendications 1-7, **caractérisé en ce que** le réseau de communication (12) est un réseau de communication mobile (12) tel qu'un réseau GSM (12).

9. Procédure pour identifier des adresses pour l'accès à des informations dans un réseau d'ordinateurs distribué (14), lesquelles informations aux adresses identifiées peuvent être interprétées par un type spécifique de terminal (X₁, ..., Xₙ, Y₁, ..., Yₘ) dans un réseau de communication sans fil (12) pour l'affichage desdites informations sur celui-ci, la procédure comprenant les étapes consistant à :
- enregistrer, pour chaque demande d'adresse envoyée d'un terminal à un dispositif de commande (16) compris dans le système (10), dans un dispositif de mémoire (20) connecté au dispositif de commande (16) le type de terminal (X₁, ..., Xₙ, Y₁, ..., Yₘ), l'adresse dans le réseau d'ordinateurs distribué (14), le numéro de répertoire d'abonné international d'abonné à un service mobile (MSISDN), et recevoir et enregistrer des statistiques produites par un dispositif processeur (18) connecté au dispositif de commande (16), lesdites statistiques connectant par paires le type de terminal (X₁, ..., Xₙ, Y₁, ..., Yₘ), l'adresse dans le réseau d'ordinateurs distribué (14), et le numéro de répertoire d'abonné international d'abonné à un service mobile (MSISDN) ; et
- reproduire lesdites statistiques, dans le but d'identifier lesdites adresses d'informations qui peuvent être interprétées par ledit type spécifique de terminal (X₁, ..., Xₙ, Y₁, ..., Yₘ).

10. Procédure pour identifier des adresses pour l'accès à des informations dans un réseau d'ordinateurs distribué (14) selon la revendication 9, **caractérisé en ce que** la procédure comprend en outre l'étape consistant à :
- produire, au moyen du dispositif processeur (18), des statistiques concernant les adresses les plus visitées d'un type spécifique de terminal (X₁, ..., Xₙ, Y₁, ..., Yₘ) sous forme de liste.

11. Procédure pour identifier des adresses pour l'accès à des informations dans un réseau d'ordinateurs distribué (14) selon la revendication 9 ou 10, **caractérisé en ce que** la procédure comprend en outre l'étape consistant à :
- produire, au moyen du dispositif processeur (18), des statistiques concernant les types de terminaux (X₁, ..., Xₙ, Y₁, ..., Yₘ) les plus utilisés d'une adresse spécifique sous forme de liste.

12. Procédure pour identifier des adresses pour l'accès à des informations dans un réseau d'ordinateurs distribué (14) selon l'une quelconque des revendications 9-11, **caractérisé en ce que** la procédure comprend en outre l'étape consistant à :
- produire, au moyen du dispositif processeur (18), des statistiques concernant les adresses les plus visitées d'un numéro de répertoire d'abonné international spécifique d'un abonné à un service mobile (MSISDN) sous forme de liste.

13. Procédure pour identifier des adresses pour l'accès à des informations dans un réseau d'ordinateurs distribué (14) selon l'une quelconque des revendications 9-12, **caractérisé en ce que** le réseau d'ordinateurs distribué (14) est Internet (14).

14. Procédure pour identifier des adresses pour l'accès à des informations dans un réseau d'ordinateurs distribué (14) selon l'une quelconque des revendications 9-13, **caractérisé en ce que** lesdites adresses sont des URL, Uniform Resource Locators.

15. Procédure pour identifier des adresses pour l'accès à des informations dans un réseau d'ordinateurs distribué (14) selon l'une quelconque des revendications 9-14, **caractérisé en ce que** ledit dispositif de mémoire (20) est une base de données (20).

16. Procédure pour identifier des adresses pour l'accès à des informations dans un réseau d'ordinateurs distribué (14) selon l'une quelconque des revendications 9-15, **caractérisé en ce que** le réseau de communication (12) est un réseau de communication mobile (12) tel qu'un réseau GSM (12).

17. Au moins un produit de programme informatique (102₁, ..., 102ₙ) qui peut être chargé directement dans la mémoire interne d'au moins un ordinateur numérique (100₁, ..., 100ₙ), comprenant des sections de code logiciel pour exécuter les étapes selon la revendication 9 quand ledit au moins un produit (102₁, ..., 102ₙ) est/sont exécuté(s) sur ledit au moins un ordinateur (100₁, ..., 100ₙ).
